# EUROPÄISCHE PATENTSCHRIFT

(11) **EP 2 443 360 B1**
(45) Veröffentlichungstag und Bekanntmachung des Hinweises auf die Patenterteilung: **15.04.2015**
(21) Anmeldenummer: 10726067.1
(22) Anmeldetag: 17.06.2010
(51) Int. Cl.: F16D 65/12

(54) **BREMSSCHEIBE SOWIE VERFAHREN ZUR HERSTELLUNG EINER SOLCHEN BREMSSCHEIBE**
BRAKE DISC AND METHOD FOR PRODUCING SUCH A BRAKE DISC
DISQUE DE FREIN ET PROCÉDÉ DE PRODUCTION D'UN TEL DISQUE DE FREIN

(30) Priorität: 19.06.2009 DE 102009027063; 23.06.2009 DE 102009027116
(43) Veröffentlichungstag der Anmeldung: 25.04.2012
(73) Patentinhaber: Sheet Cast Technologies GmbH, 85055 Ingolstadt (DE)
(72) Erfinder: LATHWESEN, Holger, 85395 Heigenhausen (DE)
(74) Vertreter: Bergmeier, Werner
(86) Internationale Anmeldenummer: PCT/EP2010/058583
(87) Internationale Veröffentlichungsnummer: WO 2010/146137

(56) Entgegenhaltungen:
- EP-A1- 1 433 973
- DD-A1- 137 910
- DE-A1- 4 003 732
- US-A- 4 853 574

## Beschreibung

Die vorliegende Erfindung betrifft eine Bremsscheibe, insbesondere für Kraftfahrzeuge, Nutzfahrzeuge und/oder Schienenfahrzeuge, nach dem Oberbegriff der unabhängigen Patentansprüche 1, 11 und 16, einen Einleger für ein Ausdehnungselement und/oder eine Rippe zum Verbinden mit einem Reibring und/oder einem Topf einer solchen Bremsscheibe nach dem Oberbegriff des Patentanspruchs 18 sowie ein Verfahren zur Herstellung einer solchen Bremsscheibe gemäß Patentanspruch 19.

Aus der EP 1 433 973 A1 ist eine einteilige Bremsscheibe mit Verbindungsspeichen bekannt. Die Verbindungsspeichen verbinden einen Topf mit einem Reibring und sind derart geformt, dass sie zur Kompensation der thermischen Ausdehnung des Reibrings nachgiebig sind. Zugleich sind sie in einer anderen Richtung derart steif ausgebildet, dass sie einer entsprechenden mechanischen Belastung standhalten.

Aus der US 4,853,574 A ist ein einteiliger Rotor einer Wirbelstrombremse bekannt, bei dem ein radial innerer Ring über Arme mit einer radial äußeren Verzögerungsscheibe verbunden ist. Die Arme erstrecken sich spiralförmig und sind an einer der beiden Stirnseiten der Verzögerungsscheibe mit dieser verbunden. Der Rotor ist einteilig ausgebildet.

Aus der DE 40 03 732 A1 ist eine in umfangsrichtung geteilte Bremsscheibe bekannt und schlägt vor, über in Abständen befindliche Ansätze die äußere Reibscheibe an dem inneren Tragkörper zu befestigen. Die Elastizität der Ansätze ist durch einen teilweise tangentialen Verlauf dieser vergrößert, um somit die gesamte Bremsscheibe als einheitliches Gußteil ausgestalten zu können oder die äußere Reibscheibe über die Ansätze zumindest in radialer Richtung gegenüber dem Tragkörper schwimmend zu lagern. Hierdurch ergibt sich ein vergrößerter Umfang der Reibringe und die Austauschmöglichkeit der Reibscheibe auf dem Tragteil.

Aus der DD 137 910 A1 ist eine zweiteilige Bremsscheibe bekannt, bei der die Nabe und der Bremsring über gerade Blattfedern unlösbar mittels Schweißen miteinander verbunden sind.

Aus der DE 10 2007 013 512 A1 ist eine Bremsscheibe bekannt, mit einem radial inneren Tragteil, das auf einer Fahrzeugachse bzw. einem Fahrzeugrad abstützbar ist und einer radial äußeren Reibscheibe, die über sich in Radialrichtung erstreckende Verbindungsstege mit dem radial inneren Tragteil verbunden ist. Zur Verbindung der sich radial erstreckenden Verbindungsstege mit dem Tragteil bzw. der Reibscheibe sind zumindest die radialen Enden der Verbindungsstege formschlüssig von dem Tragteil bzw. der Reibscheibe umgeben oder umgossen. Des Weiteren weist die Reibscheibe zwei axial gegenüberliegende Reibringe auf, die über Kühlrippen miteinander verbunden sind, die zur Bildung der Verbindungsstege gegenüber den Reibringen radial nach innen verlängert sind. Ein wesentlicher Nachteil dieser Vorrichtung besteht darin, dass die axial gegenüberliegenden Reibringe, die Kühlrippen sowie die Verbindungsstege einteilig ausgebildet sind und aus dem gleichen Material, insbesondere Grauguss, bestehen. Hieraus resultiert ein relativ hohes Gesamtgewicht der Bremsscheibe, das sich negativ auf den Kraftstoffverbrauch des Fahrzeugs auswirkt.

Aufgabe der vorliegenden Erfindung ist es somit, eine Bremsscheibe und einen Einleger zu schaffen, so dass das Gewicht der Bremsscheibe, insbesondere im Hinblick auf einen geringeren Kraftstoffverbrauch bei weitgehend gleich hoher Festigkeit und geringen Herstellungskosten, reduziert wird.

Die Aufgabe wird gelöst durch eine Bremsscheibe, und einen Einleger nach den Merkmalen der unabhängigen Patentansprüche 1 und 7.

Erfindungsgemäß weist die Bremsscheibe, die insbesondere für Kraftfahrzeuge, Nutzfahrzeuge und/oder Schienenfahrzeuge Verwendung findet, einen Topf, Ausdehnungselemente und einen Reibring auf. Der Reibring besteht aus einem Reibbandpaar, das über Rippen miteinander verbunden ist. Die Ausdehnungselemente sind radial am Topf, vorzugsweise am äußeren Umfang des Topfs, angeordnet und an ihrem dem Topf abgewandten Ende mit dem Reibring verbunden. Zumindest einige der Rippen und/oder der Ausdehnungselemente sind zumindest teilweise durch Einleger gebildet. Des Weiteren bildet mindestens ein Ausdehnungselement zumindest teilweise eine Rippe zur Verbindung des Reibbandpaares. Vorteilhafterweise kann somit die Rippe im Vergleich zum Reibbandpaar, das in der Regel insbesondere ein Graugussteil oder ein beschichtetes Aluminiumgussteil ist, ganz oder zumindest teilweise aus einem leichteren Material bestehen, so dass eine enorme Gewichtsreduktion erzielt werden kann, was sich wiederum positiv auf den Kraftstoffverbrauch auswirkt. Aber auch auf das Dämpfungs-, Schwingungs- und Kühlungsverhalten der Bremsscheibe hat dieses erfindungsgemäße Merkmal einen positiven Einfluss, da nicht nur das Material, sondern auch die Formgebung, die Neigung als auch die spezielle Anordnung der Rippen zwischen dem Reibbandpaar losgelöst von gießtechnischen Herstellungsgrenzen optimierbar ist. Bisherige Bremsscheiben haben das Problem der sogenannten Hotspotbildung - Hitzeflecken auf der Reibbandoberfläche - insbesondere infolge einer radial inhomogenen Massenverteilung des Reibrings, was das Brems- und Lenksystem zu unerwünschten Schwingungen anregt. Die durch die Ausdehnungselemente zumindest teilweise gebildeten Rippen können, unter Berücksichtigung einer idealen radialen Wärmeverteilung des Reibrings, derart geformt sein, dass die radiale Massenverteilung des Reibrings weitgehend homogen ist. Ein beim Bremsvorgang durch die thermomechanische Belastung hervorgerufenes inhomogenes Verformen des Reibbandpaares und ein daraus resultierendes Bremsrubbeln kann folglich weitgehend ausgeschlossen werden.

Bei einem Bremsvorgang erwärmt sich das Reibbandpaar im Vergleich zum Topf viel stärker, so dass durch das entstandene Temperaturgefälle in Richtung des Topfs, die mit größerem Radius steigende Wärmestromdichte im Reibbandpaar und durch die in der Regel starre Verbindung zwischen Topf und Reibring thermomechanische Spannungen auftreten, die zur Schirmung des Reibbandpaares sowie zu Rissen in der Bremsscheibe führen können. Als Schirmung wird das Verkippen des Reibrings in Axialrichtung relativ zu den Bremsbacken verstanden, was die Bremseigenschaften der Bremsscheibe stark negativ beeinflusst. Zur Vermeidung dieser negativen Effekte ist es besonders vorteilhaft, wenn die Ausdehnungselemente, insbesondere bedingt durch eine Biegung, länger sind als der kürzeste Abstand zwischen Topf und Reibring. Somit können sich die Ausdehnungselemente an die thermisch erzeugte radiale Ausdehnung des Reibbandpaares anpassen, so dass thermomechanische Spannungen zwischen Reibbandpaar und Topf, sowie eine thermomechanisch bedingte inhomogene Verformung des Reibrings stark reduziert werden. Diesbezüglich ist es ebenso vorteilhaft, wenn die Ausdehnungselemente radialelastisch ausgebildet sind und sich an die thermische Verformung des Reibrings anpassen.

Besonders vorteilhaft ist es, wenn die Rippen aus mehreren Einzelteilen bestehen und zumindest eines dieser Einzelteile einteilig mit dem Reibbandpaar gegossen ist, so dass die Eigenschaften der Rippe hinsichtlich Festigkeit, Wärmeleitfähigkeit, Kühlverhalten sowie Schwingungsverhalten positiv beeinflusst werden können.

Diesbezüglich ist es ebenso von Vorteil, wenn die Rippe mindestens eine Aussparung aufweist. Von den genannten Parametern kann durch dieses Merkmal insbesondere das Kühlverhalten der Bremsscheibe positiv beeinflusst werden.

Besonders vorteilhaft ist es, wenn die Rippen und/oder Ausdehnungselemente zumindest teilweise durch Einleger gebildet sind. Dies hat insbesondere bei der gießtechnischen Herstellung der Bremsscheibe den Vorteil, dass die Einleger material- und formbedingte Eigenschaften aufweisen können, die mit gießtechnisch hergestellten Rippen und/oder Ausdehnungselementen alleine nicht realisierbar sind.

Wenn die Verbindungen zwischen den Einlegern und dem Reibbandpaar gießtechnisch hergestellt sind, können vorteilhafterweise die Herstellungskosten der Bremsscheibe stark reduziert werden. Diesbezüglich ist es ebenso vorteilhaft, wenn die Einleger mit dem Reibbandpaar und/oder dem Topf form- und/oder stoffschlüssig verbunden sind. Eine form- und stoffschlüssige Verbindung ist des Weiteren vorteilhaft, um den starken thermomechanischen Belastungen beim Bremsvorgang standhalten zu können. Auch ist eine derartige Verbindung einfacher und kostengünstiger herzustellen als bei der Vorrichtung des aufgeführten Stands der Technik. Hierbei ist es nämlich zwingend notwendig, zwischen den Verbindungsstegen und dem Topf einen Stoffschluss zu vermeiden, um Spannungen zwischen dem Reibring und dem Topf zu reduzieren. Dies ist gießtechnisch nur sehr schwer umzusetzen und folglich mit höheren Herstellungskosten verbunden.

Zur Erhöhung der Festigkeit ist es ebenso vorteilhaft, wenn die Einleger mindestens zwei Verbindungsflächen zum Verbinden mit dem Reibbandpaar aufweisen, wobei die Verbindungsflächen zumindest teilweise Verprägungen aufweisen und/oder an den Verbindungsflächen Zähne angeordnet sind, so dass eine feste stoff- und/oder formschlüssige Verbindung gewährleistet ist. Unter Verprägungen werden Erhebungen und Vertiefungen im Bereich der Verbindungsflächen bezeichnet, die beim Deformieren der Verbindungsflächen des Einlegers unter Druck entstehen. In einer besonders bevorzugten Ausführungsform weisen die Zähne eine Schränkung auf, wodurch die Festigkeit der stoff- und/oder formschlüssigen Verbindung verbessert wird. In Abhängigkeit der gewünschten Verbindungsart können die Zähne und/oder die Verprägungen der Einleger bei der gießtechnischen Verbindung mit dem Reibbandpaar ganz oder teilweise weggeschmolzen sein. Alternativ können sie aber auch im Wesentlichen erhalten bleiben. Die Zähne und die Verprägungen vergrößern im Wesentlichen die Verbindungsfläche mit dem Reibbandpaar.

Besonders vorteilhaft ist es, wenn die Einleger, die zumindest teilweise als Rippe oder als Ausdehnungselement mit Rippe ausgebildet sein können, insbesondere im Bereich des Reibbandpaares axialelastisch bezüglich einer Rotationsachse der Bremsscheibe ausgebildet sind, wobei die Einleger in ihrem Querschnitt insbesondere eine Biegung, einen Knick, eine Profilierung, eine Krümmung, eine Freiformgeometrie, insbesondere eine Evolventengeometrie bezüglich ihrer Querachse aufweisen, so dass sich ihre Breite bei Bremsbetätigung homogen anpasst. Infolgedessen wird eine plane Reiboberfläche des Reibbandpaares gewährleistet, so dass ein Bremsrubbeln weitgehend ausgeschlossen ist. Alternativ können die Einleger in ihrer Längs- und/oder Querrichtung eine Freiformgeometrie aufweisen, die speziell zur Erfüllung der gewünschten physikalischen Eigenschaften angepasst ist. Neben einer erhöhten Festigkeit und verbesserter Dämpfung der Bremsscheibe besteht eine weitere wesentliche zu optimierende physikalische Eigenschaft der Bremsscheibe darin, dass die Wärmeleitung über die Einleger und/oder im Reibbandpaar in Bezug auf die mit größerem Außendurchmesser zunehmende Wärmestromdichte derart angepasst wird, dass insbesondere im Bereich des Reibbandpaares eine im Wesentlichen möglichst homogene Wärmeverteilung ohne signifikante Sprünge vorliegt.

Um die thermische Belastung der Bremsscheibe möglichst gering zu halten ist es besonders vorteilhaft, wenn die Einleger insbesondere im Bereich des Reibbandpaares Kühlöffnungen aufweisen. Diese können vorzugsweise quadratisch, elliptisch, kreis-, trapez- und/oder parallelogrammförmig sein. Es sind aber auch jede beliebige Freiformgeometrie und/oder andere bekannte geometrische Formen denkbar. Diesbezüglich ist es des Weiteren vorteilhaft, wenn die Kühlöffnungen axialelastisch ausgebildet sind und insbesondere eine elliptische und/oder parallelogrammförmige Kontur aufweisen. Die Form der Kühlöffnungen beeinflusst die Axialelastizität der Einleger. Beispielsweise wird sie durch eine parallelogrammförmige Kühlöffnung erhöht, wohingegen eine quadratische die Axialelastizität verringert. So ist es möglich, die Axialelastizität des Reibrings derart zu beeinflussen, dass auch beim Abbremsen aus hohen Geschwindigkeiten eine weitgehend plane Reibbandoberfläche des Reibbandpaares gewährleistet ist. Vorteilhaft ist es auch, wenn die Kühlöffnungen in axialer Richtung der Einleger eingestanzte Löcher, profilierte Öffnungen, Aussparungen und/oder Verprägungen sind.

Zur weiteren Gewichtsreduktion der Bremsscheibe ist es besonders vorteilhaft, wenn der Topf an seinem äußeren Umfang Materialfreiräume aufweist. Diese sind derart ausgebildet, dass die Festigkeit der stoff- und/oder formschlüssigen Verbindungen zwischen Topf und Einleger nicht negativ beeinflusst werden. Alternativ oder zusätzlich ist es ebenso von Vorteil, wenn der Topf an seinem inneren Umfang Materialfreiräume aufweist. Neben der Gewichtsersparnis hat dies den weiteren Vorteil, dass die Bremsscheibe nicht unbedingt von vorne auf die dafür vorgesehene Radnabe zu montieren ist. Vielmehr kann dies auch von hinten erfolgen. Hierbei wird der ausgesparte Topf zunächst von vorne durch eine ebenfalls mit korrespondierenden Aussparungen versehene Radnabe gefädelt und derart verdreht, dass die Anschraubbereiche der Radnabe und des Topfs überlappend ausgerichtet sind. Danach erfolgt die Verschraubung des Topfs mit der Radnabe, insbesondere von hinten. Vorteilhafterweise wird somit ein Verspannen des Topfs zwischen Radnabe und Felge vermieden. Infolgedessen ist im Wesentlichen ausgeschlossen, dass sich der Topf bei ungleichmäßig angezogenen Radmuttern verspannt und bricht.

Vorteilhaft ist es auch, wenn der Topf und die Einleger aus dem gleichen Werkstoff und/oder, vorzugsweise tiefziehtechnisch, einteilig hergestellt sind, da hierdurch die Herstellungskosten der Bremsscheibe stark reduziert werden.

Diesbezüglich ist es ebenso vorteilhaft, wenn der Topf und der Reibring gießtechnisch aus dem gleichen Werkstoff hergestellt sind, da somit die Einleger in einem Arbeitsschritt form- und/oder stoffschlüssig mit dem, den Topf und den Reibring bildenden, Gießmaterial umgeben werden können, so dass die Herstellungskosten der Bremsscheibe erheblich reduziert werden.

Alternativ ist es vorteilhaft, wenn der Reibring, der Topf und/oder die Einleger aus unterschiedlichen Materialien hergestellt sind, da somit in Abhängigkeit der individuellen Anforderungen für die entsprechenden Bauteile das optimale Material gewählt werden kann. Diesbezüglich ist es besonders vorteilhaft, wenn der Reibring insbesondere gießtechnisch aus Grauguss oder Edelstahlguss, der Topf insbesondere aus Aluminium, Grauguss oder Edelstahlguss sowie die Einleger insbesondere tiefziehtechnisch aus Stahlblech, Edelstahlblech und/oder hoch-, höherfesten und/oder höchstfesten Stahlwerkstoffen hergestellt sind. Hieraus resultiert eine relativ leichte und zugleich feste Bremsscheibe, die ein sehr gutes Schwingungs- und Dämpfungsverhalten aufweist.

Auch ist es vorteilhaft, wenn die Einleger, insbesondere im Bereich des Ausdehnungselements, eine Biegung aufweisen, so dass sie sich an die thermisch bedingte radiale Ausdehnung des Reibrings anpassen können. Des Weiteren wird diese Biegung eingebracht, um durch eine konstruktiv definierte und entsprechend gestaltete Zone eine Nachgiebigkeit zu erreichen, um die Eingussstellen von unerwünschten Abstütz-Reaktionen, Kräften, Momenten, Bewegungen, Schwingungen soweit wie möglich zu entlasten.

Weitere Vorteile der Erfindung sind in den nachfolgenden Ausführungsbeispielen beschrieben. Es zeigt:
- **Figur 1**: eine perspektivische Ansicht eines Einlegers, der als Ausdehnungselement mit Biegung und innerer Nachgiebigkeit und Rippe ausgebildet ist,
- **Figur 2**: eine perspektivische Ansicht eines Einlegers, der als Rippe ausgebildet ist und eine Variation der Kühlöffnungen aufweist,
- **Figuren 3 und 4**: eine perspektivische Ansicht sowie einen Längsschnitt einer innenbelüfteten Bremsscheibe gemäß einem ersten Ausführungsbeispiel, bei dem die Einleger spiralförmig in Richtung des Topfs gebogen sind,
- **Figur 5**: eine perspektivische Ansicht einer innenbelüfteten Bremsscheibe gemäß dem ersten Ausführungsbeispiel, bei dem die Einleger nur teilweise die Rippen bilden, spiralförmig ausgebildet sind und tangential zum äußeren Radius des Reibrings münden,
- **Figuren 6 und 7**: eine perspektivische Ansicht sowie einen Längsschnitt einer innenbelüfteten Bremsscheibe gemäß einem zweiten Ausführungsbeispiel, bei dem die Einleger in Richtung des Reibrings gebogen sind,
- **Figur 8**: eine perspektivische Ansicht einer innenbelüfteten Bremsscheibe gemäß dem zweiten Ausführungsbeispiel, bei dem die Einleger als Ausdehnungselemente und/oder Rippen ausgebildet sind,
- **Figur 9**: eine perspektivische Ansicht einer innenbelüfteten Bremsscheibe gemäß einem dritten Ausführungsbeispiel, bei dem der Einleger den Topf, die Ausdehnungselemente und einige Rippen bildet, wobei der Einleger durch Stanzen und/oder Tiefziehen einteilig ausgebildet ist,
- **Figur 10**: eine perspektivische Ansicht einer innenbelüfteten Bremsscheibe gemäß einem vierten Ausführungsbeispiel, bei dem ein Innentopf in einen Topfring kraftschlüssig eingepresst ist,
- **Figuren 11 und 12**: eine perspektivische Ansicht sowie einen Querschnitt einer im Fertigungsprozess befindlichen Bremsscheibe, die zum Schutz der Ausdehnungselemente Schutzelemente aufweist,
- **Figuren 13,14 und 15**: einen Querschnitt durch ein Reibbandpaar mit in Radialrichtung aufgetragener Wärmestromdichte sowie Spannungs- und Dehnungsverlauf,
- **Figuren 16,17 und 18**: einen Querschnitt durch eine alternative Ausführungsform eines Reibbandpaares mit in Radialrichtung aufgetragener Wärmestromdichte sowie Spannungs- und Dehnungsverlauf und
- **Figuren 19, 20 und 21**: einen Teilbereich einer Bremsscheibe mit Vertiefungen sowie diverse Schnitte durch diese.

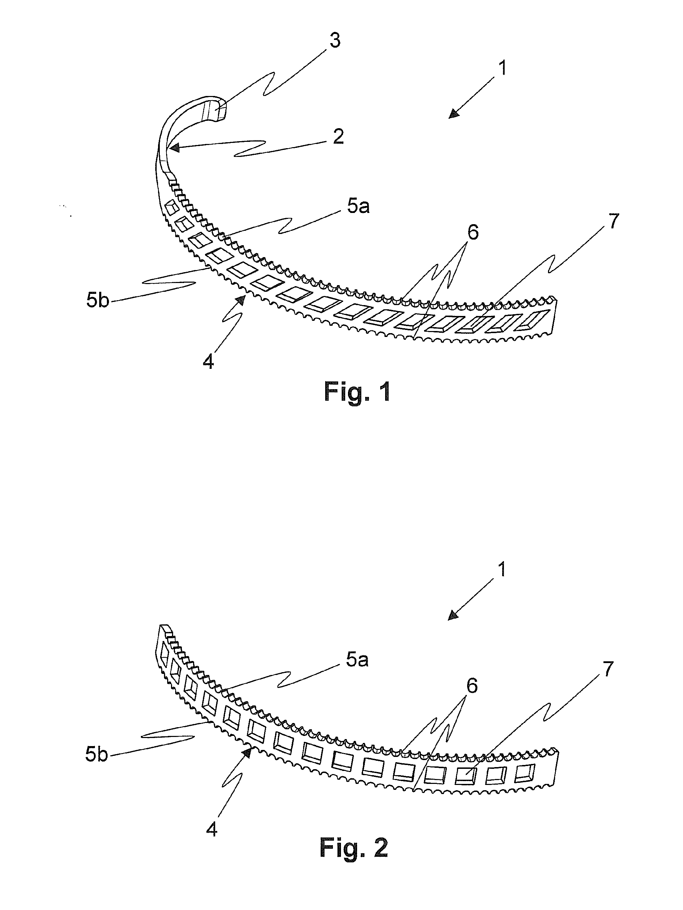

Figur 1 zeigt eine perspektivische Ansicht eines Einlegers 1, der zum Herstellen einer Verbundbremsscheibe mit einem Reibring und einem Topf vergossen werden kann. Der Einleger 1 weist einen Bereich auf, in dem er als ein Ausdehnungselement 2 ausgebildet ist. Das Ausdehnungselement 2 ist länger als der kürzeste Abstand zwischen Topf und Reibring einer dafür vorgesehenen Bremsscheibe, so dass hierdurch im Wesentlichen die Radialelastizität der Bremsscheibe gewährleistet ist. Des Weiteren weist das Ausdehnungselement 2 in Längsrichtung zur Ausbildung der Radialelastizität eine Krümmung auf, so dass sich das Ausdehnungselement 2 an die thermische Verformung des dafür vorgesehenen Reibrings anpassen kann, wodurch eine Schirmung des Reibrings weitgehend ausgeschlossen wird. Das Ausdehnungselement 2 weist an dem zur Befestigung mit dem Topf vorgesehenen Ende einen Haken 3 auf, so dass eine feste, formschlüssige Verbindung zwischen Ausdehnungselement und Topf hergestellt werden kann. Des Weiteren bildet das Ausdehnungselement 2 zumindest teilweise eine Rippe 4 des dafür vorgesehenen Reibrings aus, der vorzugsweise aus einem Reibbandpaar besteht, wobei der Einleger 1 im Bereich der Rippe 4 an den zur Verbindung mit dem Reibbandpaar vorgesehenen Verbindungsflächen 5a, 5b Zähne 6 aufweist. Bei der vorzugsweise gießtechnisch hergestellten Verbindung von Einleger 1 und Reibbandpaar werden die Zähne 6 völlig oder teilweise mit dem Reibbandpaar verschmolzen, so dass eine feste form- und/oder stoffschlüssige Verbindung entsteht.

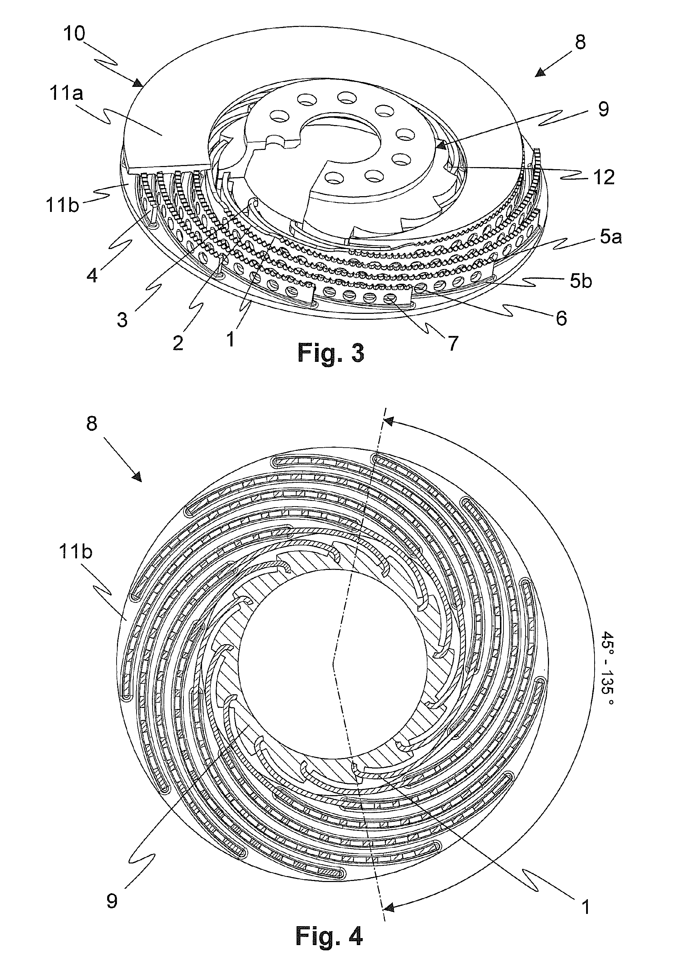

Des Weiteren weist der Einleger 1 im Bereich der Rippe 4 Kühlöffnungen 7 auf, die eine gute Belüftung der Bremsscheibe gewährleisten. Die Kühlöffnungen 7 sind im vorliegenden Ausführungsbeispiel parallelogrammförmig ausgebildet, so dass die Axialelastizität des Einlegers 1 in Querrichtung im Bereich der Rippe 4 verbessert wird. Ein wesentliches Problem bei Bremsvorgängen besteht nämlich darin, dass sich die Oberfläche des Reibbandpaares bei Bremsbetätigung aufgrund der durch die Rippen bedingten unterschiedlichen Materialverteilung innerhalb des Reibrings inhomogen verformt. Die Folge ist ein unerwünschtes Bremsrubbeln, das durch die entsprechend geformten Kühlöffnungen 7 weitgehend reduziert werden kann, indem sich der Einleger 1 im Bereich der Rippe 4 in Querrichtung an die aufgebrachte Bremskraft anpasst. Die Kühlöffnungen 7 können aber auch, wie in Figur 2 oder Figur 3 dargestellt, quadratisch oder kreisförmig ausgebildet sein. Hierdurch kann die Axialelastizität des Einlegers 1 im Bereich der Rippe 4 beeinflusst werden. Alternativ oder redundant kann hierfür auch die Rippe 4 des Einlegers 1 in Längsrichtung einen Knick oder eine Biegung aufweisen.

Figur 2 zeigt einen Einleger 1, der als Rippe 4 zur Verbindung mit einem Reibbandpaar ausgebildet ist. Hierfür weist die Rippe 4 an ihren dem Reibbandpaar zugewandten Verbindungsflächen 5a, 5b Zähne 6 auf, die bei der gießtechnisch hergestellten Verbindung mit dem Reibbandpaar ganz oder teilweise wegschmelzen, so dass eine feste form- und/oder stoffschlüssige Verbindung hergestellt wird. Zum Schutz eines Radlagers vor Überhitzung, weist die Rippe 4 eine gekrümmte kaltluftzuführende Form auf, so dass bei Rotation Kaltluft in Richtung des Topfs zugeführt wird. Des Weiteren verfügt die Rippe 4 über Kühlöffnungen 7, die in dem vorliegenden Ausführungsbeispiel quadratisch ausgeführt sind, so dass die Axialelastizität des Einlegers 1 reduziert wird.

Die Figuren 3 und 4 zeigen eine perspektivische Ansicht sowie einen Längsschnitt einer innenbelüfteten Bremsscheibe 8, die einen Topf 9 und einen Reibring 10 aufweist, wobei der Reibring 10 aus einem Reibbandpaar 11a, 11 b besteht, das über Rippen 4 miteinander verbunden ist. Am äußeren Umfang des Topfs 9 sind Einleger 1 gemäß dem Ausführungsbeispiel aus Figur 1 angeordnet, die den Topf 9 mit dem Reibring 10 radialelastisch verbinden. Hierfür weisen die Einleger 1 Ausdehnungselemente 2 auf, die an ihrem dem Topf 9 zugewandten Ende mit einem Haken 3 formschlüssig verbunden sind. Im Bereich des Reibrings 10 sind die Einleger 1 als Rippen 4 ausgebildet, wobei sie an ihren dem Reibbandpaar 11 a, 11 b zugewandten Verbindungsflächen 5a, 5b Zähne 6 aufweisen, die bei der gießtechnisch hergestellten form- und/oder stoffschlüssigen Verbindung mit dem Reibbandpaar 11 a, 11 b zumindest teilweise wegschmelzen. Um den thermischen Belastungen entgegenzuwirken, weisen die Einleger 1 im Bereich der Rippe 4 Kühlöffnungen 7 auf, die kreisförmig ausgebildet sind. Des Weiteren weist der Topf 9 an seinem äußeren Umfang im Verbindungsbereich mit den Einlegern 1 Materialfreiräume 12 auf, so dass das Gewicht der Bremsscheibe 8 reduziert wird. Der Topf 9 erhält hierdurch ein sägezahnähnliches Profil.

Wie aus der Figur 4 hervorgeht, erstrecken sich die Einleger 1 spiralförmig von ihrem dem Topf 9 zugewandten Ende bis zu ihrem dem Topf 9 abgewandten Ende in einem Winkelbereich von ca. 150°. Vorteilhafterweise wird hierdurch eine sehr gute Massenverteilung im Bereich der Bremsscheibe 8 bewirkt, so dass ein Bremsrubbeln aufgrund einer ungewollten Hotspotbildung weitgehend ausgeschlossen ist. Hierfür ist es notwendig, dass die Einleger 1 in Bezug zum äußeren Umfang des Topfs 9 in einem sehr flachen Winkel austreten, vorzugsweise in einem Winkelbereich von 5° bis 10° sowie in Bezug zum inneren Umfang des Reibrings 10 in einem spitzen Winkel eintreten, vorzugsweise in einem Winkelbereich von 35° bis 40°. Vorteilhafterweise kann hierdurch unter anderem das Dämpfungs-, Schwingungs- sowie Festigkeitsverhalten der Bremsscheibe positiv beeinflusst werden.

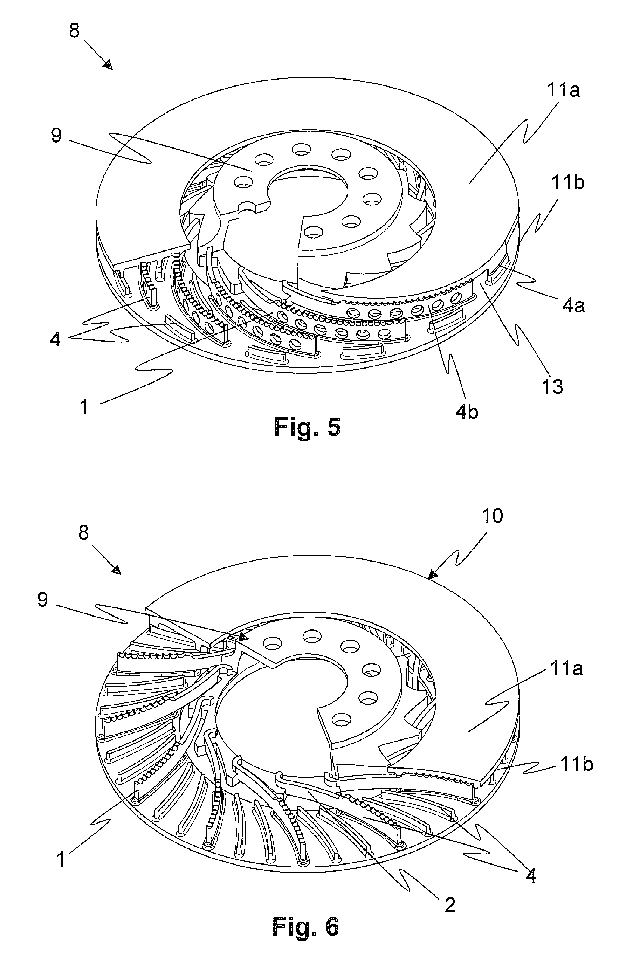

Figur 5 zeigt eine perspektivische Ansicht einer innenbelüfteten Bremsscheibe 8 gemäß dem ersten Ausführungsbeispiel der Figur 3 und Figur 4 mit spiralförmig erstreckenden Einlegern 1, die in Richtung des Topfs 9 gebogen sind. Im Vergleich zu den Figuren 3 und 4 bilden die Einleger 1 jedoch nur teilweise die Rippen 4a, 4b. Die Rippe 4a, 4b ist mehrteilig, wobei ein Teil der Rippe 4a einteilig mit dem Reibbandpaar 11 a, 11 b gegossen ist. Der zweite Teil der Rippe 4b wird durch den Einleger 1 gebildet. Des Weiteren weist die Rippe 4a, 4b eine Aussparung 13 auf. Durch die Aussparung 13 der Rippe 4a, 4b wird insbesondere das Gewicht der Bremsscheibe 8 reduziert, aber auch das Dämpfungs- und Schwingungsverhalten kann hierdurch beeinflusst werden.

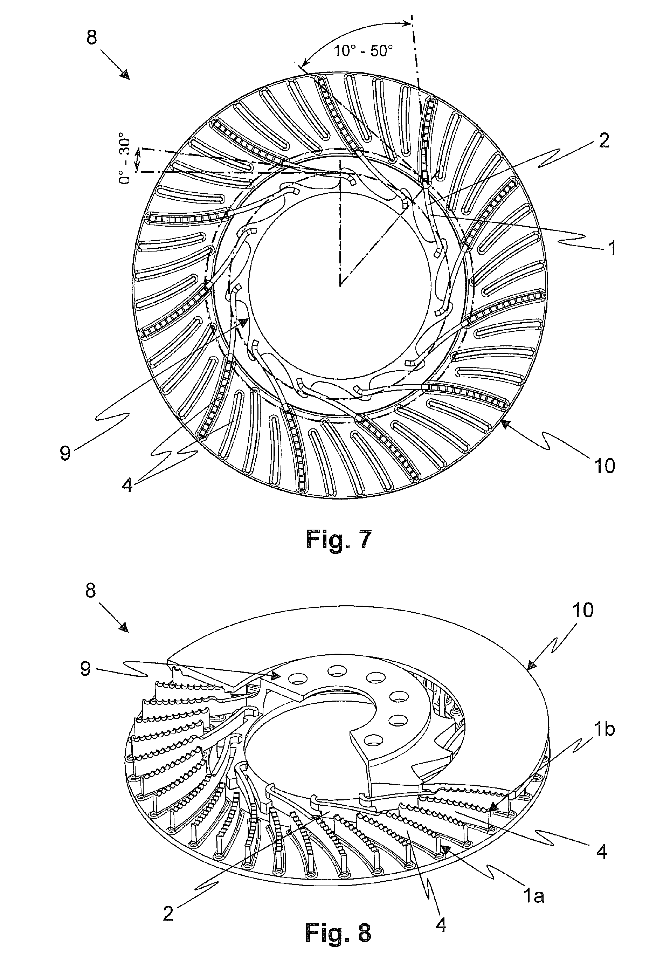

In einem aus Figur 6 und 7 zu entnehmenden zweiten Ausführungsbeispiel der innenbelüfteten Bremsscheibe 8 sind die Einleger 1 derart gebogen, dass sie nicht gemäß dem ersten Ausführungsbeispiel aus Figur 3, 4 und 5 spiralförmig verlaufen, sondern einer Evolvente ähnlich, insbesondere einer Freiformgeometrie folgend, nach außen gebogen sind, so dass sie in Richtung des Reibrings 10 zeigen. Des Weiteren sind die Rippen 4 einteilig ausgebildet, wobei sie entweder durch einen der Einleger 1 gebildet werden, oder einteilig mit dem Reibbandpaar 11 a, 11 b gegossen sind. Auch in diesem Ausführungsbeispiel umfassen die Einleger 1 ein Ausdehnungselement 2, das den Topf 9 radialelastisch mit dem Reibring 10 verbindet. Die Verbindung zwischen den Einlegern 1 und dem Reibbandpaar 11 a, 11 b sowie dem Topf 9 ist form- und/oder stoffschlüssig in einem gießtechnischen Verfahren hergestellt.

Wie aus der Figur 7 hervorgeht, treten die Ausdehnungselemente 2, die im vorliegenden Fall als Einleger 1 ausgebildet sind, aus dem Topf 9 im Wesentlichen in einem Winkelbereich von 0° bis 30°, vorzugsweise in einem Winkelbereich von 5° bis 10°, aus. Des Weiteren treten sie relativ flach in einem Winkelbereich von 10° bis 50°, vorzugsweise in einem Winkelbereich von 35° bis 40° in den Reibring 10 ein. Hierdurch wird eine sehr hohe Festigkeit der Bremsscheibe 8 sowie eine sehr gute Massenverteilung der Rippen 4, die teilweise durch die Einleger 1 gebildet werden, erzielt.

In der Figur 8 ist eine auf dem zweiten Ausführungsbeispiel basierende innenbelüftete Bremsscheibe 8 abgebildet, die dadurch charakterisiert ist, dass jede der Rippen 4 durch einen Einleger 1 a, 1 b ausgebildet ist. Der Einleger 1 a besteht hierbei gemäß dem in Figur 1 dargestellten Ausführungsbeispiel aus einem Ausdehnungselement 2 und der Rippe 4. Der Einleger 1 b umfasst gemäß dem in Figur 2 dargestellten Ausführungsbeispiel ausschließlich die Rippe. Folglich kann im Hinblick auf eine Gewichtsoptimierung der Bremsscheibe 8 für die Einleger 1 a,1 b ein leichteres Material, insbesondere Edelstahlblech, hoch-, höherfestes oder höchstfestes Stahlblech verwendet werden.

Die in Figur 3 bis Figur 8 dargestellten Bremsscheiben 8 werden in einem Gießverfahren hergestellt. Hierbei werden zunächst die Einleger 1 in einem ersten Verfahrensschritt durch Tiefziehen, Stanzen, Biegen und/oder Verprägen sowie Schränken der Zähne 6 gefertigt. Danach werden die Einleger 1 zur Bildung des Topfs 9 sowie des Reibrings 10 mit Grauguss form- und/oder stoffschlüssig umgossen. Alternativ kann aber auch zunächst lediglich der Reibring 10 aus Grauguss gegossen und erst anschließend zur Gewichtsreduktion der Topf 9 mit Aluminium aufgegossen werden.

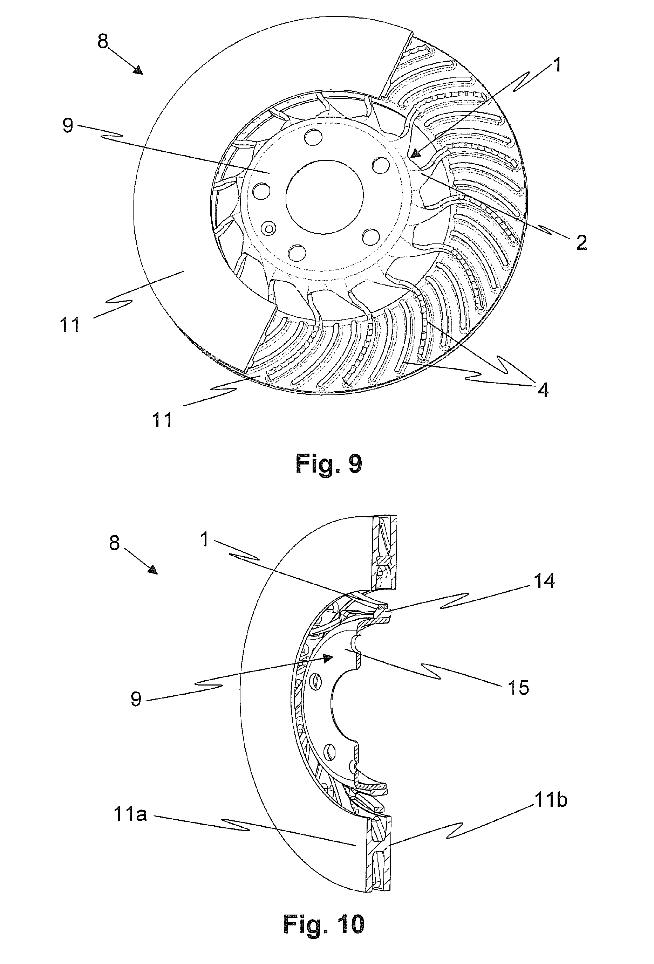

Alternativ können die Einleger 1 aber auch, wie in Figur 9 dargestellt, einteilig mit dem Topf, insbesondere aus Edelstahl, gefertigt sein. Der Einleger 1 umfasst somit einteilig den Topf 9, die Ausdehnungselemente 2 sowie eine gewisse Anzahl der Rippen 4. In einem zweiten Verfahrensschritt wird der Einleger 1 mit dem Reibbandpaar 11 a, 11 b im Bereich der Rippen 4 vergossen, wobei ein Teil der Rippen 4 mit dem Reibbandpaar 11 a, 11 b einteilig gegossen werden.

Eine weitere alternative Ausführungsform der Bremsscheibe 8 ist in Figur 10 dargestellt, wobei auch hier analog zu den in Figur 3, 4, 5, 6, 7 und 8 dargestellten Varianten der Bremsscheibe 8 die Einleger 1 gießtechnisch mit dem Reibbandpaar 11 a, 11 b und dem Topf 9 form- und/oder stoffschlüssig verbunden sind. Hierbei besteht jedoch der Topf 9 aus einem Topfring 14 und einem Innentopf 15. Vorteilhafterweise kann somit der Innentopf 15 aus einem leichteren und gießtechnisch teurer und aufwendiger zu verbindendem Material, insbesondere Aludruckguss, bestehen und erst nach der gießtechnischen Verbindung der Einleger 1 mit dem Reibbandpaar 11 a, 11 b und dem Topfring 14 in den Topfring 14 kraft- und/oder formschlüssig eingepresst werden. Durch den relativ leichten Innentopf 15 ist eine enorme Gewichtsreduktion der Bremsscheibe 8 zu bewirken.

In einer nicht dargestellten alternativen Ausführungsform kann der Topfring 14 als Tragring 14' ausgebildet sein, der im Wesentlichen die mit einem Ausdehnungsbereich versehenen Einleger 1 einteilig aufnimmt. Nachdem der Tragring 14' und das Reibbandpaar 11 a, 11 b, insbesondere aus dem gleichen Material, gegossen wurden, besteht die Möglichkeit, danach den Innentopf 15 aus einem anderen Material, vorzugsweise zur Massenreduktion aus Aluminium mit dem Tragring 14' zu vergießen. Ferner kann die Verbindung zwischen Tragring 14' und Innentopf 15 über Form- und/oder Kraftschluss, also mittels Fügevorgänge, wie Aufpressen oder Aufschrumpfen und/oder in Verbindung mit zumindest einem torsionsabstützenden formschlüssigen nicht dargestellten Element erfolgt.

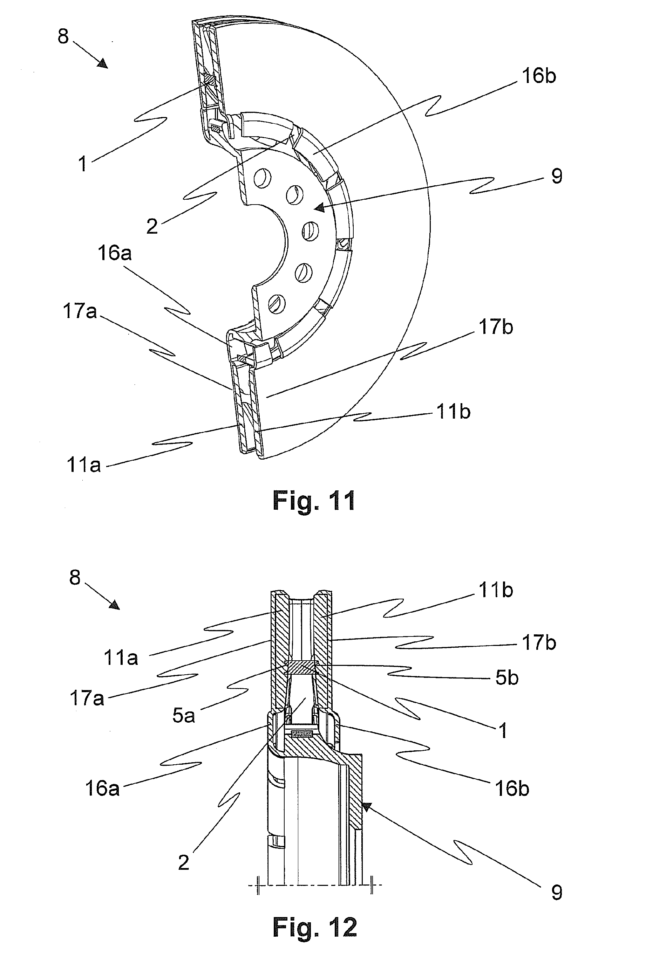

Figur 11 und Figur 12 zeigen eine perspektivische Ansicht sowie einen Querschnitt einer im Fertigungsprozess befindlichen Bremsscheibe 8, bei der die Einleger 1 mit dem Reibbandpaar 11 a, 11 b und dem Topf 9 umgossen sind. Das Reibbandpaar 11 a, 11 b ist hierbei mit einer Bearbeitungszugabe 17a, 17b versehen, die in einem nachgelagerten Bearbeitungsschritt im Hinblick auf eine ideale Oberflächengüte abgetragen wird. Dies geschieht mit Hilfe eines Beschussmaterials, insbesondere Schrot oder Sand, das mit hoher Geschwindigkeit auf die Bremsscheibe 8 geschossen wird. Dass bei diesem Nachbearbeitungsschritt die Ausdehnungselemente 2 der Einleger 1 nicht beschädigt werden, weist die Bremsscheibe 8 Schutzelemente 16a, 16b auf, wobei der Reibring und/oder der Topf mit den Schutzelementen 16a, 16b in dem vorgelagerten Gussprozess in einem Stück gegossen werden. Erst danach werden die Schutzelemente 16 zur Fertigbearbeitung der Bremsscheibe 8 abgetrennt.

Der Figur 12 ist des Weiteren zu entnehmen, dass die Zähne 6 (siehe Figur 1) der Einleger 1 an den Verbindungsflächen 5a, 5b zumindest teilweise angeschmolzen sein können, so dass eine zumindest teilweise stoffschlüssige Verbindung mit dem Reibbandpaar 11 a, 11 b vorliegen kann.

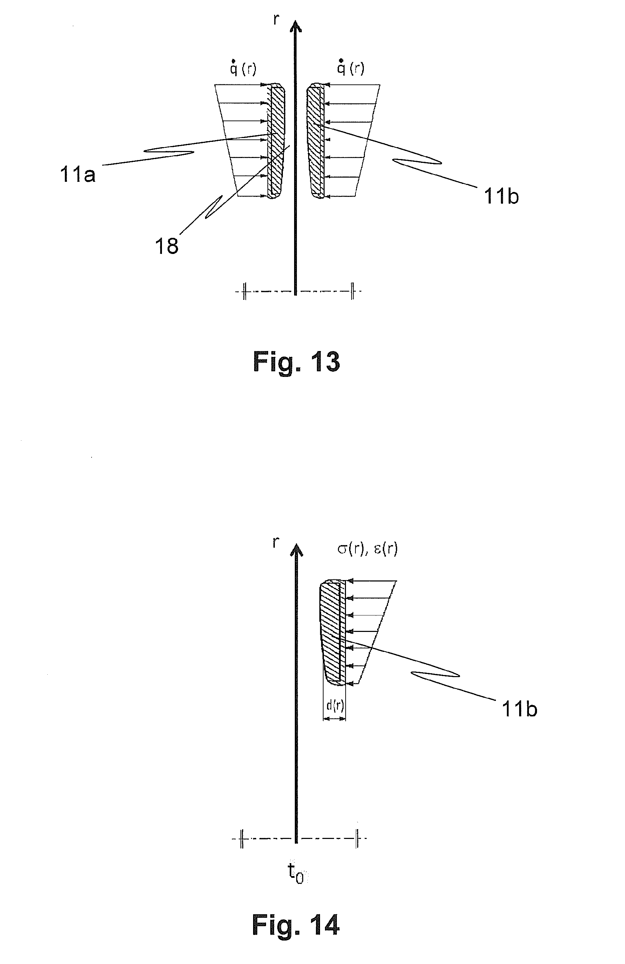

Figuren 13, 14 und 15 zeigen einen Querschnitt durch ein Reibbandpaar 11 a, 11 b mit in Radialrichtung aufgetragener Wärmestromdichte sowie Spannungs- und Dehnungsverlauf. Hierbei ist der Querschnittsverlauf des Reibbandpaares 11 a, 11 b in radialer Richtung derart angepasst, dass diese mit radial zunehmender Wärmestromdichte mittels ihrer über den Radius gesehen funktional in Form einer Freiformfläche gestalteten Querschnitt optimal den wärmeinduzierten Spannungen widerstehen.

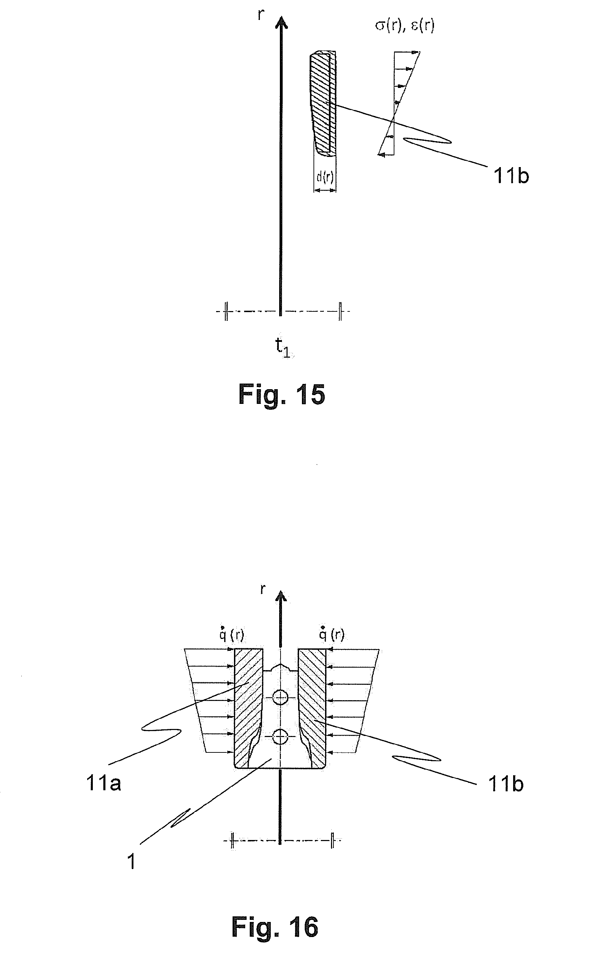

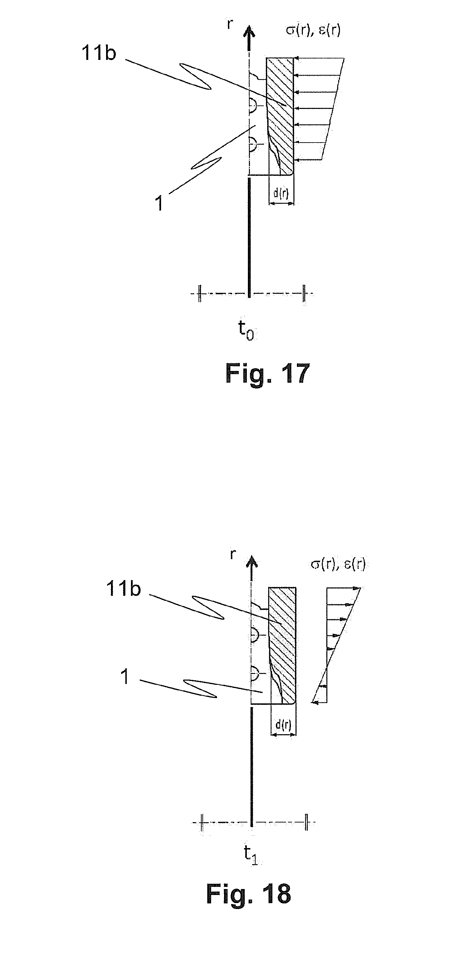

Des Weiteren zeigen die Figuren 16, 17 und 18 eine alternative Ausführungsform eines Reibbandpaares mit in Radialrichtung aufgetragener Wärmestromdichte sowie Spannungs- und Dehnungsverlauf. Hierbei weisen die Innenflächen der Reibbänder 11a, 11 b eine Freiformgeometrie auf.

Die den Querschnitt betreffende funktionale wärmeübergangsteigernde Gestaltung der inneren Kontur des Reibbandpaares 11a, 11 b entspricht insbesondere einer Parabel ungerader, mindestens dritter oder höherer ungerader Ordnung, die vor dem Wendepunkt durch eine die Oberfläche und damit die Konvektion verstärkende Vertiefung und/oder Erhöhung überlagert wird, wobei schroffe Konturübergänge durch gussgerechte Gestaltung vermieden werden.

Diese innere freiformflächig gestaltete Kontur sichert in den notwendigen Bereichen, insbesondere zur Außenseite der Reibringflächen hin, mit Zunahme der Wärmestromdichte über die hiermit jeweils einhergehende Materialdicke ein ausreichendes Widerstandsmoment gegen Biegung senkrecht zur Achse r, so dass eine Verkippung des Reibbandpaares 11 a, 11 b in axialer Richtung im Wesentlichen ausgeschlossen ist und somit eine einseitige Belastung und eine damit einhergehender erhöhter Abrieb der Bremsbeläge im Wesentlichen ausgeschlossen ist.

Zwischen dem Reibbandpaar 11a, 11 b befindet sich ein Kühlkanal 18, der mittels des mit radial zunehmender Wärmestromdichte belasteten Reibbandpaares 11 a, 11 b für den wärmeabführenden Luftstrom strömungstechnisch derart optimal ausgestaltet ist, dass das Reibbandpaar 11 a, 11 b insbesondere durch Verwirbelungen der Luft und einen optimalen Wärmeübergang entlastet wird. Des Weiteren sind die Kühlkanäle 18 der Bremsscheibe frei von jeglichen Befestigungselementen, so dass eine optimale Durchströmung der Kühlkanäle 18 gewährleistet ist.

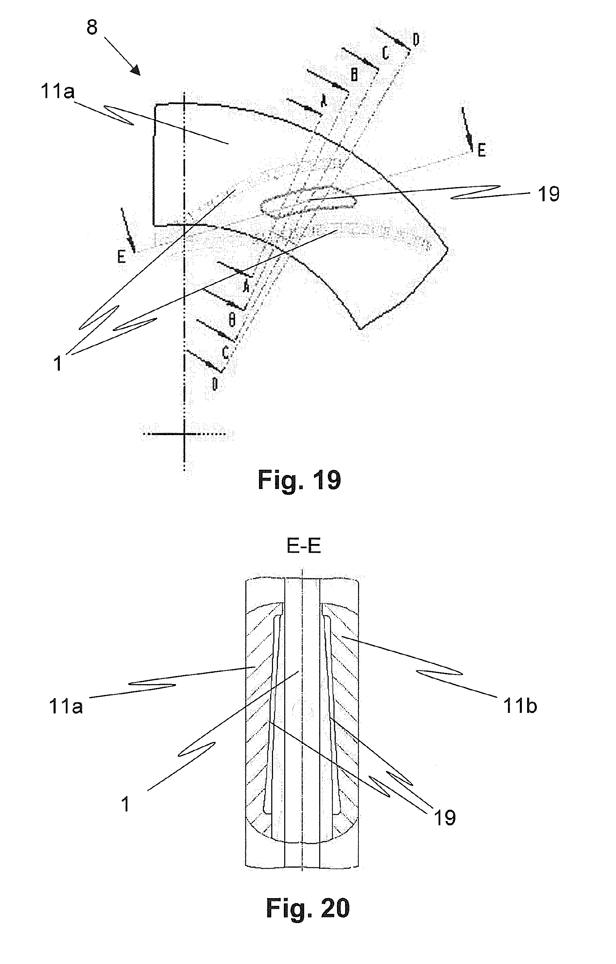

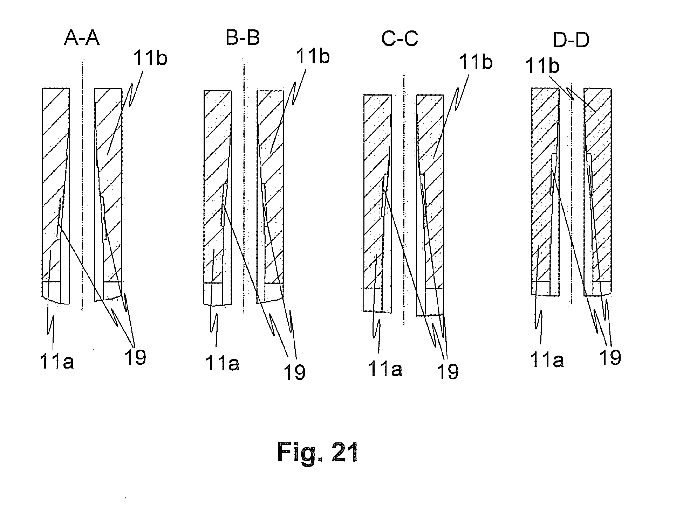

Figuren 19, 20 und 21 zeigen einen Teilbereich einer Bremsscheibe 8 mit Vertiefungen 19 in verschiedenen Schnittansichten. Hierbei ist zu erkennen, dass sich, insbesondere bedingt durch die Vertiefung 19, der Querschnitt des ersten Reibbands 11 a und/oder des zweiten Reibbands 11 b in Umfangsrichtung der Bremsscheibe 8 verändert, insbesondere in seiner Breite, so dass im Hinblick auf eine gewichtsreduzierte Bremsscheibe ein Optimum aus Gewicht und zugleich maximaler Festigkeit erzielbar ist. Ferner kann hierdurch die Dämpfungseigenschaft der Bremsscheibe optimiert werden.

Im übrigen ist die Erfindung nicht auf die dargestellten Ausführungsbeispiele beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

## Patentansprüche

1. Bremsscheibe (8) für Kraftfahrzeuge und/oder Nutzfahrzeuge mit einem Reibring (10) bestehend aus einem Reibbandpaar (11a; 11 b), das über Rippen (4) miteinander verbunden ist,
mit einem Topf (9) und
mit Ausdehnungselementen (2),
die radial am Topf (9) angeordnet sind,
die an ihrem dem Topf (9) abgewandten Ende mit dem Reibring (10) verbunden sind und
von denen mindestens einige Ausdehnungselemente (2) jeweils zumindest teilweise eine Rippe (4) zur Verbindung des Reibbandpaares (11 a; 11b) bilden,
**dadurch gekennzeichnet,**
**dass** zumindest einige dieser rippenbildenden Ausdehnungselemente (2) jeweils durch einen Einleger (1) gebildet sind,
**dass** die beiden stirnseitigen Verbindungen zwischen den Einlegern (1) und dem jeweiligen Reibband (11a; 11 b) gießtechnisch hergestellt sind und
**dass** die Einleger (1) im Vergleich zum gegossenen Reibbandpaar (11 a; 11 b) aus einem dazu unterschiedlichen Material hergestellt sind.

2. Bremsscheibe nach dem vorherigen Anspruch, **dadurch gekennzeichnet, dass** die Ausdehnungselemente (2) radialelastisch ausgebildet sind, wobei die Ausdehnungselemente (2) länger sind als der kürzeste Abstand zwischen Topf (9) und Reibring (10), so dass sie sich an die thermische Verformung des Reibrings (10) anpassen.

3. Bremsscheibe nach einem oder mehreren der vorherigen Ansprüche, **dadurch gekennzeichnet, dass** die Einleger (1) mit dem Reibbandpaar (11 a; 11 b) und/oder dem Topf (9) form- und/oder stoffschlüssig verbunden sind.

4. Bremsscheibe nach einem oder mehreren der vorherigen Ansprüche, **dadurch gekennzeichnet, dass** die Einleger (1) mindestens zwei Verbindungsflächen (5a; 5b) zum Verbinden mit dem Reibbandpaar (11a; 11 b) aufweisen, wobei die Verbindungsflächen (5a; 5b) zumindest teilweise Verprägungen aufweisen und/oder an den Verbindungsflächen (5a; 5b) Zähne (6) angeordnet sind, wobei die Zähne (6) insbesondere eine Schränkung aufweisen.

5. Bremsscheibe nach einem oder mehreren der vorherigen Ansprüche, **dadurch gekennzeichnet, dass** zumindest einige der Einleger (1) im Bereich des Reibbandpaares (11a; 11b) axialelastisch ausgebildet sind, wobei die Einleger (1) in ihrem Querschnitt insbesondere eine Biegung, einen Knick und/oder eine Freiformgeometrie aufweisen.

6. Bremsscheibe nach einem oder mehreren der vorherigen Ansprüche, **dadurch gekennzeichnet, dass** die Einleger (1) Kühlöffnungen (7) aufweisen, insbesondere im Bereich des Reibbandpaares (11 a; 11 b), wobei die Kühlöffnungen (7) vorzugsweise axialelastisch ausgebildet sind, insbesondere eine im Wesentlichen elliptische und/oder parallelogrammförmige Kontur aufweisen

7. Einleger (1)zum Verbinden mit einem Reibbandpaar (11 a; 11b) und/oder einem Topf (9) einer Bremsscheibe (8), die nach einem oder mehreren der vorherigen Ansprüche ausgebildet ist,
**dadurch gekennzeichnet,**
**dass** der Einleger (1) als ein Ausdehnungselement (2) und eine Rippe (4) der dafür vorgesehenen Bremsscheibe (8) ausgebildet ist und dass der Einleger (1) im Bereich der Rippe (4) jeweils in einem zum Verbinden mit dem jeweiligen Reibband (11 a; 11 b) vorgesehenen Bereich Zähne (6) und/oder Verprägungen aufweist, die beim Vergießen mit dem Reibbandpaar (11a; 11 b) eine feste form- und/oder stoffschlüssige Verbindung bilden.

## Claims

1. Brake disc (8) for motor vehicles and/or utility vehicles with a friction ring (10), consisting of a friction strip pair (11a; 11b), connected to one another through ribs (4),
with a pot (9) and
with expansion elements (2)
arranged radially on the pot (9),
connected to the friction ring (10) on their end facing away from the pot (9), and
of which at least some expansion elements (2) respectively form at least partially one rib (4) for connection of the friction strip pair (11 a; 11b). **characterized in**
**that** at least some of said rib-forming expansion elements (2) are each formed by one insert (1),
**that** said two frontal connections between the inserts (1) and the respective friction strip (11 a; 11 b) are made by casting and
**that** the inserts (1) are made from a different material compared to the cast friction strip pair (11a; 11b).

2. Brake disc according to the previous claim, **characterized in that** the expansion elements (2) have a radial-elastic design, in which case the expansion elements (2) are longer than the shortest distance between pot (9) and friction ring (10) so that they adjust to the thermal deformation of the friction ring (10).

3. Brake disc according to one or several of the preceding claims, **characterized in that** the inserts (1) are connected to the friction strip pair (11 a; 11 b) and/or the pot (9) through a form-fitted and/or substance-to-substance connection.

4. Brake disc according to one or several of the preceding claims, **characterized in that** the inserts (1) have at least two connecting surfaces (5a; 5b) for connection to the friction strip pair (11a; 11b), in which case the connecting surfaces (5a; 5b) at least partially have embossings and/or teeth (6) are arranged on the connecting surfaces (5a; 5b), in which case the teeth (6), in particular, have a setting.

5. Brake disc according to one or several of the preceding claims, **characterized in that** at least some of the inserts (1) have an axial-elastic design in the region of the friction strip pair (11 a; 11b), wherein the inserts (1) have especially a bending, kink and/or free-form geometry in their cross section.

6. Brake disc according to one or several of the preceding claims, **characterized in that** the inserts (1) have cooling openings (7), especially in the region of the friction strip pair (11 a; 11b), wherein the cooling openings (7) preferably have an axial-elastic design and in particular a largely elliptical and/or parallelogram-shaped contour.

7. Insert (1) for connection to a friction strip pair (11 a; 11 b) and/or to a pot (9) of a brake disc (8), configured according to one or several of the preceding claims,
**characterized in**
**that** the insert (1) is executed as an expansion element (2) and a rib (4) of the brake disc (8) provided for it and
**that** the insert (1) in the region of the rib (4) in a respective region, intended for connection to the respective friction strip pair (11 a; 11 b) has teeth (6) and/or embossings forming a strong form-fitted and/or substance-to-substance connection to the friction strip pair (11 a; 11 b) during casting.

## Revendications

1. Disque de frein (8) pour véhicules à moteur et/ou utilitaires,
avec une bague de friction (10) composée d'une paire de bandes de friction (11a ; 11b), qui sont reliées l'une à l'autre par des nervures (4), avec un pot (9) et
avec des éléments d'expansion (2),
disposés radialement au pot (9),
qui sont reliés à la bague de friction (10) par leur extrémité éloignée du pot (9) et
dont quelques éléments d'expansion (2) au moins forment respectivement au moins partiellement une nervure (4) pour relier la paire de bandes de friction (11a ; 11 b),
**caractérisé en ce que**
quelques-uns au moins de ces éléments d'expansion (2) formant une nervure sont respectivement formés par un insert (1),
que les deux liaisons frontales entre les inserts (1) et la bande de friction correspondante (11a ; 11 b) sont réalisées par une technique de coulage et
que les inserts (1), par comparaison avec la paire de bandes de friction coulée (11a ; 11b), sont fabriqués en un matériau différent.

2. Disque de frein selon la revendication précédente, **caractérisé en ce que** les éléments d'expansion (2) se présentent sous une forme radialement élastique, sachant que les éléments d'expansion (2) sont plus longs que la plus courte distance entre le pot (9) et la bague de friction (10), de sorte qu'ils s'adaptent à la déformation thermique de la bague de friction (10).

3. Disque de frein selon l'une ou plusieurs des revendications précédentes, **caractérisé en ce que** les inserts (1) sont reliés avec la paire de bandes de friction (11 a ; 11 b) et/ou le pot (9) par assemblage de forme et/ou de matériau.

4. Disque de frein selon l'une ou plusieurs des revendications précédentes, **caractérisé en ce que** les inserts (1) présentent au moins deux surfaces de connexion (5a ; 5b) pour la connexion avec la paire de bandes de friction (11a ; 11b), sachant que les surfaces de connexion (5a ; 5b) présentent au moins partiellement des estampages et/ou que des dents (6) sont disposées sur les surfaces de connexion (5a ; 5b), sachant que les dents (6) présentent en particulier un vrillage.

5. Disque de frein selon l'une ou plusieurs des revendications précédentes, **caractérisé en ce que** quelques-uns au moins des inserts (1) se présentent sous une forme axialement élastique dans la zone de la paire de bandes de friction (11 a ; 11 b), sachant que les inserts,(1) présentent en leur section transversale en particulier une flexion, un coude et/ou une géométrie en forme libre.

6. Disque de frein selon l'une ou plusieurs des revendications précédentes, **caractérisé en ce que** les inserts (1) présentent des trous de refroidissement (7), en particulier dans la zone de la paire de bandes de friction (11 a ; 11 b), sachant que les trous de refroidissement (7) se présentent sous une forme de préférence axialement élastique, qu'ils en particulier présentent un contour essentiellement elliptique et/ou en forme de parallélogramme.

7. Insert (1) destiné à être relié avec une paire de bandes de friction (11a ; 11 b) et/ou un pot (9) d'un disque de frein (8), qui se présente sous une forme selon l'une ou plusieurs des revendications précédentes, **caractérisé en ce que**
l'insert (1) se présente sous la forme d'un élément d'expansion (2) et d'une nervure (4) du disque de frein (8) prévu à cet effet et
que l'insert (1) présente, dans la zone de la nervure (4), respectivement dans une zone destinée à la connexion avec la bande de friction respective (11a ; 11 b), des dents (6) et/ou des estampages, qui forment un assemblage de forme et/ou de matériau rigide lors du coulage avec la paire de bandes de friction (11a ; 11b).
